# EUROPÄISCHE PATENTSCHRIFT

(11) **EP 2 115 284 B1**
(45) Veröffentlichungstag und Bekanntmachung des Hinweises auf die Patenterteilung: **04.08.2010**
(21) Anmeldenummer: 08707510.7
(22) Anmeldetag: 01.02.2008
(51) Int. Cl.: F02B 37/02, F01N 13/08, F02B 37/007, F01N 13/10

(54) **BRENNKRAFTMASCHINE MIT EINER ABGASANLAGE**
INTERNAL COMBUSTION ENGINE WITH AN EXHAUST GAS SYSTEM
MOTEUR À COMBUSTION INTERNE AVEC UN SYSTÈME D'ÉCHAPPEMENT

(30) Priorität: 10.02.2007 DE 102007006699
(43) Veröffentlichungstag der Anmeldung: 11.11.2009
(73) Patentinhaber: Bayerische Motoren Werke Aktiengesellschaft, 80809 München (DE)
(72) Erfinder: SCHWARZ, Christian, 81245 München (DE); GRAF, Hubert, 81669 München (DE); VERDOORN, Werner, 82256 Fürstenfeldbruck (DE)
(86) Internationale Anmeldenummer: PCT/EP2008/000827
(87) Internationale Veröffentlichungsnummer: WO 2008/095656

(56) Entgegenhaltungen:
- EP-A- 1 662 109
- EP-A- 1 772 602
- WO-A-2006/050896
- DE-A1- 4 030 652
- DE-A1- 10 015 291
- DE-A1-102006 042 464
- DE-C1- 3 138 369

## Beschreibung

Die Erfindung betrifft eine Brennkraftmaschine mit den Merkmalen aus dem Oberbegriff des Patentanspruchs 1, wie sie z.B. in der EP 1662109 gezeigt ist.

Einen weiteren Stand der Technik zeigt die deutsche Offenlegungsschrift DE 10 2004 057 129 A1. Aus dieser Offenlegungsschrift ist eine Brennkraftmaschine in V-Bauart mit 8 Zylindern bekannt, mit einer Zündfolge von 90° Kurbelwinkel von Zylinder zu Zylinder. Jede Zylinderbank der Brennkraftmaschine weist vier Zylinder auf. Jeweils zwei Zylinder einer Zylinderbank münden in einen Abgasstrang, der jeweils die Abgase der vier zugeordneten Zylinder in einen Abgasturbolader leitet. Somit weist die Brennkraftmaschine zwei vierflutige Abgasstränge auf. Beide Abgasstrange bilden miteinander eine Abgasanlage. Vor dem Eintritt in die Turbolader, sind die Abgasstränge abgasführend miteinander verbindbar. In Strömungsrichtung des Abgases ist nach jedem Abgasturbolader jeweils eine Abgasreinigungsanlage in der Abgasanlage angeordnet.

Nachteilig an der beschriebenen Ausgestaltung ist ein sog. Übersprechen der Abgase der jeweils in einen Abgasstrang mündenden vier Zylinder, wodurch eine maximale Öffnungsdauer der Gaswechseleinlassventile nicht realisierbar ist.

Aufgabe der vorliegenden Erfindung ist es, eine Maßnahme aufzuzeigen, die das Übersprechen der Abgase der vier, einem einzelnen Abgasstrang zugeordneten Zylinder zu verhindern.

Diese Aufgabe wird durch die Merkmale im kennzeichnenden Teil des Patentanspruchs 1 gelöst.

Durch die erfindungsgemäße Ausgestaltung beträgt der Zündabstand 360° Kurbelwinkel der zwei einem Abgasstrang, bzw. Flut zugeordneten Zylinder. Somit wird das Turbinenrad des Abgasturboladers mit Abgasen beaufschlagt mit 180° Zündabstand. Durch diese Ausgestaltung ist es erfindungsgemäß möglich, die Öffnungsdauer der Gaswechseleinlassventile gegenüber dem Stand der Technik zu verlängern, wodurch mehr Leistung und Drehmoment für die Brennkraftmaschine erzielt wird. Aufgrund der erfindungsgemäßen Ausgestaltung der Abgasanlage wird ein Optimum für den Ladungswechsel erzielt, weil eine symmetrische, gleiche Füllung mit Frischluft für alle acht Zylinder vorliegt. Durch die optimale symmetrische, gleiche Füllung verbleibt weniger Restgas in den einzelnen Zylindern, wodurch die Klopfneigung der Brennkraftmaschine wesentlich verbessert wird. Ferner ist der Brennstoffverbrauch, insbesondere bei Volllast der Brennkraftmaschine, besser. Darüber hinaus liegen bei sehr geringen Drehzahlen bereits schon sehr hohe Drehmomentwerte an. Hierdurch wird das sog. "Turboloch", eine Drehmomentschwäche im unteren Drehzahlbereich, praktisch fast vollständig eliminiert. In vorteilhafter Weise kann die erfindungsgemäße Abgasanlage sowohl für Brennkraftmaschinen die nach dem Otto-Prinzip arbeiten, als auch für Brennkraftmaschinen die nach dem Diesel-Prinzip arbeiten, zum Einsatz kommen.

Durch die Ausgestaltung gemäß Patentanspruch 2 werden extrem kurze Wege für das Abgas in der Abgasanlage erzielt, was die Strömungsverluste des Abgases minimiert und der Emissionierung, sowie dem Brennstoffverbrauch zu Gute kommt.

Die Ausgestaltung gemäß Patentanspruch 3 ist eine besonders bevorzugte Ausführungsvariante für einen zweiflutigen Abgasturbolader, wobei jede Flut von einem Abgasstrang mit Abgas beaufschlagt wird.

Die Ausgestaltung gemäß Patentanspruch 4 ist eine zweite ebenfalls besonders bevorzugte Ausführungsvariante, bei der jeder Abgasturbolader zwei Abgasturbinen mit jeweils einer eigenen Flut aufweist, in die jeweils ein Abgasstrang mündet.

Die Ausgestaltung gemäß der Patentansprüche 5 bis 8 sind besonders bevorzugte Ausführungs-, bzw. Herstellvarianten.

Im Folgenden ist die Erfindung anhand eines besonders bevorzugten Ausführungsbeispieles schematisch in einer einzigen Figur näher erläutert.

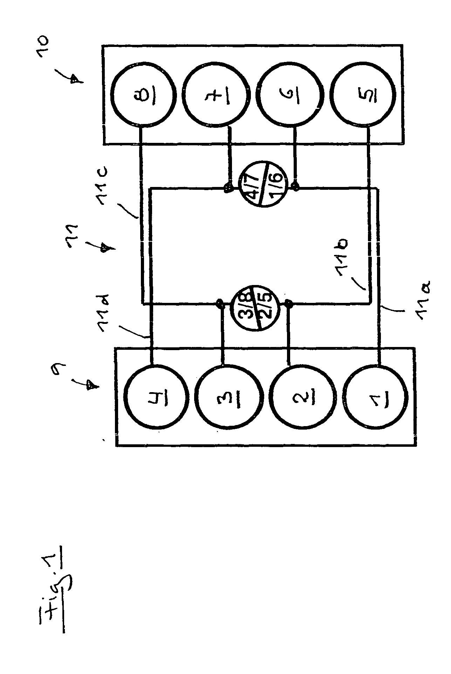

Fig. 1 zeigt schematisch eine erfindungsgemäß ausgestaltete Abgasanlage für eine 8-zylindrige Brennkraftmaschine in V-Bauart. Die Brennkraftmaschine weist eine erste Zylinderbank 9 und eine zweite, der ersten Zylinderbank 9 gegenüber liegende Zylinderbank 10 auf. Die erste Zylinderbank 9 weist vier in Reihe angeordnete Zylinder 1, 2, 3, 4 und die zweite Zylinderbank 10 weist ebenfalls vier in Reihe angeordnete Zylinder 5, 6, 7, 8 auf, wobei die Zylinder 1 und 5, 2 und 6, 3 und 7 und die Zylinder 4 und 8 einander gegenüberliegend angeordnet sind. Ein Zündabstand von Zylinder zu Zylinder beträgt nominell 90°, wobei bei einer technischen Realisierung der Erfindung, abhängig vom Betriebszustand der Brennkraftmaschine, der Zündabstand von 85° bis 95° variieren kann.

Zwischen den Zylinderbänken 9 und 10, d. h. im V, sind zwei nicht dargestellte Abgasturbolader anordenbar, die über eine Abgasanlage 11 mit den Zylindern 1, 2, 3, 4, 5, 6, 7, 8 gasführend miteinander verbindbar sind. Die Abgasanlage 11 ist aus einem ersten Abgasstrang 11a, einem zweiten Abgasstrang 11b, einem dritten Abgasstrang 11c sowie einem vierten Abgasstrang 11d aufgebaut. Der erste Abgasstrang 11a verbindet die Zylinder 1 und 6 abgasführend miteinander und mündet in einen ersten Abgaseintritt (erste Flut) eines ersten nicht dargestellten Abgasturbolader. Der vierte Abgasstrang 11d verbindet die Zylinder 4 und 7 abgasführend miteinander und mündet in einen zweiten Abgaseintritt (zweite Flut) des ersten Abgasturboladers. Der zweite Abgasstrang 11b verbindet die Zylinder 2 und 5 abgasführend miteinander und mündet in einen ersten Abgaseintritt (dritte Flut) eines zweiten nicht dargestellten Abgasturboladers. Der dritte Abgasstrang 11c verbindet die Zylinder 3 und 8 abgasführend miteinander und mündet in einen zweiten Abgaseintritt (vierte Flut) des zweiten Abgasturboladers.

Bevorzugt sind der erste und dem zweite Abgasturbolader jeweils ein Twin-Scroll-Abgasturbolader. Alternativ ist es auch möglich, Abgasturbolader mit zwei Abgasturbinen mit jeweils einer eigenen Flut einzusetzen.

Im vorliegenden Ausführungsbeispiel sind die Abgasturbolader im V zwischen den Zylinderbänken 9 und 10 angeordnet, in einem anderen Ausführungsbeispiel können die Abgasturbolader jedoch auch außen, d. h. vor und/oder hinter oder seitlich an die Brennkraftmaschine angeordnet sein. Aus Gewichtsgründen wird die Abgasanlage 11 bevorzugt als Blechbauteil, wiederum bevorzugt in luftspaltisolierter Ausführung, gefertigt. Auch die Fertigung als Gussbauteil ist möglich, was jedoch zu Gewichtsnachteilen führt. Entsprechend ist auch eine Verbundbauweise als kombiniertes Blech/Gussbauteil möglich. Auch eine Ausführung als flüssigkeitsgekühlte Leichtmetallabgasanlage ist möglich. Die Kühlung erfolgt hierbei vorzugsweise mit einem Kühlmittel der Brennkraftmaschine, wobei vorzugsweise als Leichtmetall eine Aluminiumlegierung verwendet wird.

Die Verwendung der erfindungsgemäßen Abgasanlage ist an jeder 8-zylindrigen Brennkraftmaschine die im 4-Takt arbeitet möglich, egal ob diese nach dem Otto- oder Dieselbrennverfahren arbeitet.

Durch die erfindungsgemäße Ausgestaltung der Abgasanlage "sieht" jede Turbine der Abgasturbolader einen Zündabstand von 180° Kurbelwinkel. Abhängig vom Betriebszustand der Brennkraftmaschine kann dieser Zündabstand auch um +/- 5° variieren. Dies ist der maximal erzielbare Zündabstand für eine Brennkraftmaschine mit 8 Zylindern. Dieser maximale Zündabstand führt zu einem Optimum des Ladungswechsels, da eine exakt symmetrische, gleiche Füllung für alle Zylinder 1, 2, 3, 4, 5, 6, 7, 8 erzielt wird. Weiter verbleibt weniger Restgas in den Zylindern 1, 2, 3, 4, 5, 6, 7, 8, was zu einer geringeren Klopfneigung der Brennkraftmaschine führt. Besonders hervorzuheben ist die verlängerte Öffnungsdauer der Gaswechseleinlassventile bzw. der Nockenwelle, wodurch eine deutlich höhere Leistung, sowie ein höheres Drehmoment der Brennkraftmaschine erzielt werden. Neben der Leistungssteigerung ist auch der Brennstoffverbrauch im Bereich der Volllast deutlich verbessert. Ein weiterer Hauptvorteil wird bei niedrigen Drehzahlen erzielt, da bei sehr niedrigen Drehzahlen bereits sehr hohe Drehmomente der Brennkraftmaschine erreicht werden. Hierdurch kann ein "Turboloch", eine Drehmomentschwäche im unteren Drehzahlbereich, deutlich minimiert werden, so dass diese Schwäche im praktischen Fahrbetrieb nicht mehr in Erscheinung tritt. Darüber hinaus wird eine äußerst gleichmäßige Abgasbeaufschlagung der Turbinen erzielt, wodurch deren Lebensdauer deutlich verlängert wird.

### Bezugszeichenliste:

- 1.: erster Zylinder
- 2.: zweiter Zylinder
- 3.: dritter Zylinder
- 4.: vierter Zylinder
- 5.: fünfter Zylinder
- 6.: sechster Zylinder
- 7.: siebter Zylinder
- 8.: achter Zylinder
- 9.: erste
- 10.: zweite Zylinderbank
- 11.: Abgasanlage
- 11a: erster Abgasstrang
- 11b: zweiter Abgasstrang
- 11c: dritter Abgasstrang
- 11d: vierter Abgasstrang

## Patentansprüche

1. Brennkraftmaschine mit acht Zylindern in V-Bauart mit einer Abgasanlage (11) mit einem ersten und einem zweiten Abgasturbolader
wobei von einem ersten, einem zweiten, einem dritten und einem vierten, in Reihe nebeneinander angeordneten Zylinder (1, 2, 3, 4) eine erste Zylinderbank (9) und von einem fünften, einem sechsten, einem siebten und einem achten, in Reihe nebeneinander angeordneten Zylinder (5, 6, 7, 8) eine zweite, der ersten Zylinderbank (9) gegenüberliegende Zylinderbank (10) gebildet ist, wobei die Brennkraftmaschine von Zylinder von Zylinder eine Zündfolge von 90° Kurbelwinkel aufweist,
wobei
die Abgasanlage (11) einen ersten, einen zweiten, einen dritten und einen vierten Abgasstrang (11a, 11b, 11c, 11d) von den Zylindern (1, 2, 3, 4, 5, 6, 7, 8) zu den zwei Abgasturboladern aufweist, und
wobei einem Abgasstrang (11a, 11b, 11c, 11d) jeweils zwei Zylinder (1, 2, 3, 4, 5, 6, 7, 8) und zwei Abgassträngen (11a, 11b, 11c, 11d) jeweils ein Abgasturbolader zugeordnet ist,
**dadurch gekennzeichnet, dass**
- zwei, einem Abgasstrang (11a, 11b, 11c, 11d) zugeordnete Zylinder (1, 2, 3, 4, 5, 6, 7, 8) einen Zündabstand von 360° Kurbelwinkel aufweisen und
- dass der erste und der zweite, einem Abgasturbolader zugeordnete Abgasstrang (11a, 11b, 11c, 11d) eine um 180° Kurbelwinkel zueinander verschobene Zündfolge aufweist.

2. Brennkraftmaschine mit einer Abgasanlage nach Patentanspruch 1,
**dadurch gekennzeichnet, dass** die Abgasanlage (11) und die zwei Abgasturbolader weitgehend im V zwischen den Zylinderbänken (9, 10) angeordnet sind.

3. Brennkraftmaschine mit einer Abgasanlage nach Patentanspruch 1 oder 2,
**dadurch gekennzeichnet, dass** der erste und der zweite Turbolader Twin-Scroll-Turbolader sind.

4. Brennkraftmaschine mit einer Abgasanlage nach Patentanspruch 1 oder 2, wobei der erste Abgasturbolader ein erstes Turbinenrad und der zweite Abgasturbolader ein zweites Turbinenrad aufweist,
**dadurch gekennzeichnet, dass** der erste Turbolader ein drittes Turbinenrad und der zweite Turbolader ein viertes Turbinenrad aufweist.

5. Brennkraftmaschine mit einer Abgasanlage nach einem der Patentansprüche 1 bis 4,
**dadurch gekennzeichnet, dass** die Abgasanlage (11) als ein Blechbauteil gefertigt ist.

6. Brennkraftmaschine mit einer Abgasanlage nach einem der Patentansprüche 1 bis 4,
**dadurch gekennzeichnet, dass** die Abgasanlage (11) als ein Gussbauteil gefertigt ist.

7. Brennkraftmaschine mit einer Abgasanlage nach einem der Patentansprüche 1 bis 4,
**dadurch gekennzeichnet, dass** die Abgasanlage (11) in einer Verbundbauweise als ein kombiniertes Blech- und Gussbauteil gefertigt ist.

8. Brennkraftmaschine mit einer Abgasanlage nach einem der Patentansprüche 1 bis 4,
**dadurch gekennzeichnet, dass** die Abgasanlage (11) eine flüssigkeitsgekühlte Leichtmetallabgasanlage ist.

## Claims

1. An eight-cylinder V-type internal combustion engine comprising an exhaust system (11) with a first and a second turbocharger, wherein a first row of cylinders (9) is made up of a first, a second, a third and a fourth cylinder (1, 2, 3, 4) arranged in line and a second row of cylinders (10) opposite the first row (9) is made up of a fifth, a sixth, a seventh and an eighth cylinder (5, 6, 7, 8) arranged in line, wherein the engine has an ignition sequence with a crank angle of 90° from cylinder to cylinder,
wherein
the exhaust system (11) has a first, a second, a third and a fourth branch (11a, 11b, 11c, 11d) from the cylinders (1, 2, 3, 4, 5, 6, 7, 8) to the two turbochargers and
wherein
each two cylinders (1, 2, 3, 4, 5, 6, 7, 8) are associated with an exhaust branch (11a, 11b, 11c, 11) and each turbocharger is associated with two branches (11a, 11b, 11c, 11d),
**characterised in that**
each pair of cylinders (1, 2, 3, 4, 5, 6, 7, 8) associated with an exhaust branch (11a, 11b, 11c, 11d) are separated by an ignition interval corresponding to a crank angle of 360° and
the first and the second exhaust branch (11a, 11b, 11c, 11d) associated with a turbocharger have an ignition sequence offset by a crank angle of 180° from one another.

2. An internal combustion engine comprising an exhaust system according to claim 1, **characterised in that** the exhaust system (11) and the two turbochargers are disposed substantially in a V between the rows of cylinders (9, 10).

3. An engine according to claim 1 or claim 2, **characterised in that** the first and the second turbocharger are twin-scroll turbochargers.

4. An engine according to claim 1 or claim 2, wherein the first turbocharger has a first turbine wheel and the second turbocharger has a second turbine wheel, **characterised in that** the first turbocharger has a third turbine wheel and a second turbocharger has a fourth turbine wheel.

5. An engine according to any of claims 1 to 4, **characterised in that** the exhaust system (11) is a sheet-metal component.

6. An engine according to any of claims 1 to 4, **characterised in that** the exhaust system (11) is a cast-iron component.

7. An engine according to any of claims 1 to 4, **characterised in that** the exhaust system (11) is a sheet-metal and a cast-iron component combined in a composite construction.

8. An engine according to any of claims 1 to 4, **characterised in that** the exhaust system (11) is a liquid-cooled light-metal exhaust system.

## Revendications

1. Moteur à combustion interne à huit cylindres en V comportant une installation de gaz d'échappement (11) équipée d'un premier et d'un second turbocompresseurs de gaz d'échappement,
dans lequel
un premier, un second, troisième et un quatrième cylindres (1, 2, 3, 4) voisins en ligne, forment un premier banc (9) de cylindres et un cinquième, sixième, septième et huitième cylindres (5, 6, 7, 8) en ligne forment un second banc de cylindres (10) en regard du premier banc de cylindres (9),
- le moteur à combustion interne équipé d'une installation de gaz d'échappement équipé d'une installation de gaz d'échappement ayant un ordre d'allumage des cylindres, correspondant à un angle de vilebrequin de 90°,
dans lequel
- l'installation de gaz d'échappement (11) comprend une première, une seconde, une troisième et une quatrième conduites de gaz d'échappement (11a, 11b, 11c, 11d) issues des cylindres (1, 2, 3, 4, 5, 6, 7, 8), reliées au second turbocompresseur de gaz d'échappement, et
- la conduite de gaz d'échappement (11a, 11b, 11c, 11d) de chaque fois deux cylindres (1, 2, 3, 4, 5, 6, 7, 8) et deux conduites de gaz d'échappement (11a, 11b, 11c, 11d) étant associée respectivement à un turbocompresseur de gaz d'échappement,
**caractérisé en ce que**
- deux cylindres (1, 2, 3, 4, 5, 6, 7, 8) associés à une conduite de gaz d'échappement (11a, 11b, 11c, 11d) correspondent à un intervalle d'allumage pour un angle de vilebrequin de 360°, et
- la première et la seconde conduites de gaz d'échappement (11a, 11b, 11c, 11d) associés à un turbocompresseur de gaz d'échappement correspondant à un ordre d'allumage décalé respectivement d'un angle de vilebrequin de 180°.

2. Moteur à combustion interne équipé d'une installation de gaz d'échappement selon la revendication 1,
**caractérisé en ce que**
l'installation de gaz d'échappement (11) et les deux turbocompresseurs de gaz d'échappement, sont placés dans l'intervalle en V entre les bancs de cylindres (9, 10).

3. Moteur à combustion interne équipé d'une installation de gaz d'échappement selon la revendication 1 ou 2,
**caractérisé en ce que**
le premier et le second turbocompresseurs sont des turbocompresseurs à double spirale.

4. Moteur à combustion interne équipé d'une installation de gaz d'échappement selon la revendication 1 ou 2,
dans lequel le premier turbocompresseur de gaz d'échappement comporte un premier rotor de turbine et le second turbocompresseur de gaz d'échappement comporte un second rotor de turbine,
**caractérisé en ce que**
le premier turbocompresseur de gaz d'échappement comporte un troisième rotor de turbine et le second turbocompresseur de gaz d'échappement comporte un quatrième rotor de turbine.

5. Moteur à combustion interne équipé d'une installation de gaz d'échappement selon l'une des revendications 1 à 4,
**caractérisé en ce que**
l'installation de gaz d'échappement (11) est fabriquée sous la forme d'une pièce en tôle.

6. Moteur à combustion interne équipé d'une installation de gaz d'échappement selon les revendications 1 à 4,
**caractérisé en ce que**
l'installation de gaz d'échappement (11) est fabriquée sous la forme d'une pièce en fonte.

7. Moteur à combustion interne équipé d'une installation de gaz d'échappement selon les revendications 1 à 4,
**caractérisé en ce que**
l'installation de gaz d'échappement (11) a une construction composite réalisée sous la forme d'une pièce combinée en tôle et en fonte.

8. Moteur à combustion interne équipé d'une installation de gaz d'échappement selon les revendications 1 à 4,
**caractérisé en ce que**
l'installation de gaz d'échappement (11) est une installation de gaz d'échappement en métal léger refroidi par du liquide.
